Europäisches Patentamt

European Patent Office

Office européen des brevets

(11) Publication number: **0 263 771**
A1

# (12) EUROPEAN PATENT APPLICATION

(21) Application number: **87500063.0**

(51) Int. Cl.⁴: **B 23 G 5/10**

(22) Date of filing: **25.09.87**

(30) Priority: **06.10.86 ES 8602437**

(43) Date of publication of application:
**13.04.88 Bulletin 88/15**

(84) Designated Contracting States: **DE FR IT**

(71) Applicant: **CIVA TOOLS, S.A.**
**Barrio Urquizuarán**
**Elorrio Vizcaya (ES)**

(72) Inventor: **Echeverria Urbieta, D. José Luis**
**Goizeta 31-2.**
**E-48230 Elorrio Vizcaya (ES)**

(74) Representative: **Lopez Medrano, Santiago**
**Gran Via, 40 -5.**
**E-28013 Madrid (ES)**

(54) Improvements in screwing dies.

(57) A screwing die (5) with a cover fixed to the body of the screwing die and above the eccentric-holder part (1), in which by means of an internal spring and steel ball mechanism (29), the said eccentric-holder (1) is fixed with two different screw thread diameters, and is operated to allow the total release of the die chasers at the end of the thread cutting operation. The mechanism can be external, by means of a lever (8) which is mounted on the eccentric-holder, with a projection (11) and a toothed area (9) which operates on the side (7) of the side of the cover when the lever is turned.

FIG: 1

EP 0 263 771 A1

Bundesdruckerei Berlin

**Beschreibung**

Spanish User Models numbers 143.949 and 146.438 are well-known and refer to screwing dies made up of a screwing die body in which are housed a series of blades or die chasers which move radially towards the hollow centre of the body of the screwing die, thanks to the action of a rotating disc equipped with eccentric grooves, which are housed on the lugs of the die chasers in such a way that on the disc being turned, the die chasers became inserted in the hollow to a greater or lesser degree, so as to thread pipes of different diameters. In these known screwing dies, a device was offered based on a trigger which was housed, when descending and rising, alternatively in a set of notcheson the periphery of the rotating disc to thread two different measurements in the part to be worked, in such a way that when the thread was cut, the trigger was depressed and the rotating disc was turned slightly to make the die chaser draw back, for which purpose the said disc has a toothed outer part to make it easy to turn it manually and thus free the part being worked.

In these previously existing systems, the rotating disc had to be turned manually, once that the said trigger had also been manually depressed so as to leave the disc free, all of which meant a series of slow, annoying operations to free the threaded part.

In this technique with the Spanish User Models mentioned earlier, the problem to be solved was centred on the fact that with this type of threading tool, once that the thread had been cut, all manner of means were attempted to move the die chasers away from the pipe, for example, which has been threaded, in order to avoid the operations of turning the screwing die in the opposite direction to extract it from its contact with the item being threaded and consequently speed the work up.

Within the conventional techniques in this field, the patents DE. 693,499-ROLLER, UK. 393.072-METIVER, US. 1.644.143-NONNEMAN, UK-129.906-BORDEN, UK. 16.842-BORDEN and DE. 1.527.191-ROLLER are also known, in which solutions were pointed out intended by one or other means to achieve a fast disconnection between the die chaser and the item being threaded, once that the task of threading had been performed. In these techniques, screwing die mechanisms were made known which were made up of a thread-cutting head or body on which the die chaser teeth or combs were radially distributed. The die chasers were provided either with projections or with recesses on which the eccentric recesses or projections of the lower face of a contact finger or eccentric holder handwheel, in which by turning this contact finger or handwheel in one direction or the other, the die chaser teeth moved towards or away from the central hollow of the screwing die, in which the pipe to be threaded was found. In these same techniques, a front cover was secured to the eccentric holder, in order to keep it from being extracted and with freedom to rotate in relation to the said cover.

Screwing dies of the types described were also known, in which by means of several kinds of mechanisms, it was possible to adapt one single screwing die to two different diameters to be threaded.

As opposed to these techniques, the invention provides a screwing die which is capable of threading two different measurements, and in which to release the pressure of the die chaser teeth on the already threaded part, nothing more than one, single, very simple operation is needed, with which the die chaser teeth draw back totally and automatically from the part and lose contact with it so that a new part to be worked can be inserted.

In the patent, two pints of action of the different mechanisms are contemplated, directed towards being able to carry out two different threads with one single screwing die. One of these is by means of operating an auxiliary lever fitted on the eccentric-holder part, which is connected with the front cover, and the other by means of the simple manual turning of the eccentric-holder part. Given that the installations in which this type of screwing dies are applied are usually varied, either one or the other item will be used for the task to be performed, depending on the cases.

In identical conditions, two different actions are also contemplated for the extraction of the die chasers once that the threading operation has been performed, so as to be adaptable to the requirements of the most common installations.

For one type of action, the patent is made up of an eccentric-holder and a cover, with the eccentric-holder being provided with a series of grooves or eccentric projections which take in a set of lugs of the die chasersm so that when the eccentric-holder is turned to the left or to the right, the die chasers move towards or away from the central hollow. The cover fitted on the eccentric-holder has a circular portion with holes through which it is fixed to some internal teeth of the threading head. These teeth have spaces between them and the die chasers move in these spaces. The cover also has a neck piece going downwards, which is situated in the circular hollow that the said teeth give, with which the said threading head becomes fixed, and its circular portion situated on the outer front of the eccentric-holder.

The eccentric-holder is provided with a projection or boss on which is fixed a locking or opening lever with the possibility that it can be turned, and this turning is carried out in a funda mentally horizontal plane. This lever is equipped with a tooth situated at a certain distance from its turning point and also with a toothed area fundamentally placed near the said turning point.

The cover, which as has been stated is fixed, is provided with two grooves on the periphery of its circular portion to receive the tooth of the lever, as well as with a toothed portion near the toothed area of the lever.

The eccentric-holder can be moved in a circular direction, and in this preliminary movement the tooth of the lever can become housed in one of the two grooves of the cover, so that two different outlets of the die chasers are reached, making it possible to choose the one desired according to the task to be carried out, with which the screwing die is ready to be used for screwing, on the eccentric-holder becoming immobilized in the cover with the peculiarity that in this situation, the toothed portion of the said cover is near the toothed portion of the lever.

When the part to be worked has already been threaded, it is necessary to quickly separate the connection between the die chasers and the part in order to extract the screwing die for a new operation, for which it will be necessary to disconnect the engagement of the tooth of the lever in the groove of the disc so as to free the eccentric-holder, and then turn the eccentric-holder to separate the die-chasers from the worked part. To do this, the lever has a prolongation which is sufficient to allow pressure to be put upon it, thanks to which the tooth of the lever comes out of the groove in the cover and the toothed area of the lever, in turning, engages with the toothed part of the cover, thus automatically turning the disc and so extracting the die chasers, which automatically allows the screwing die to be taken out.

Obviously, the grooves in the cover and the teeth in the same part have to be situated in an area of the cover which is near the lever, in order to avoid unnecessary turning movements on the eccentric-holder, and for this reason the grooves and the teeth are situated in the area adjacent to that of the horizontal turning of the lever.

The lever is operated, as we said, by pressure being put on a prolonged part of it, which can be straight, curved or elbowed according to the cases, with the constant that it must provide a base sufficient to allow force to be exerted on it so as to extract the tooth and engage with the cover. In fixed assemblies, for example in work carried out on a base, a retracting bar or projection can be fitted in the said base, which once the part to be worked has been threaded, extracted and collides with the end of the lever on operating the screwing die, In manual working, it will be sufficient to strike the said lever end in order to break the connection between the cover and the eccentric-holder and at the same time turn the eccentric-holder so as to extract the die chasers and take out the screwing die.

The cover lets the eccentric-holder turn freely when the two are not connected by way of the lever, so it will be understood that in the absence of the action of the said lever, the cover does not exercise any pressure whatsoever on the eccentric-holder, which is liable to turn freely and pull with it the die chasers of the screwing die.

The projection of the lever will always be found in the horizontal plane of the arm of the lever, so that the turning movements of the said lever cause it to enter one of the recesses or housings in the cover. However, the free end of this lever, which is going to be operated at the end to open the die chaser teeth, may be included in this plane or in another which is different in height.

When the projection of the lever meets the portion of the cover in which the two recesses are situated, one of these recesses will be chosen to receive the lever portion, in accordance with the diameter of the thread to be cut in the part. To do this, the eccentric-holder part will be turned suitably so as to make the two parts coincide and then engage them.

In broad outline, it must be pointed out that with the aim of helping the operation of the lever from the outside, its free end, either in the continent plane of turning or in another, different plane in height from that, it will be situated out of the fields of the eccentric-holder part so that it can be handled more easily.

It was also mentioned earlier that in those cases in which the opening of the die chasers was carried out or was required to be carried out directly and manually on the eccentric-holder part, the patent also provides a purpose for this, for whose aims and previously the said eccentric-holder is preferably carried out, with an ergonomy suitable for being grasped by the operator and obliged it towards opening the die chasers.

In this respect, which is also the purpose of the patent, and certainly not a secondary one, a solution of supreme and extraordinary mechanical simplicity is provided, given that it is sufficient to count on the following parts:
- Threading head, conventional.
- Eccentric-holder part, conventional.
- Die chasers, conventional.
- Front cover, conventional.

With these four commonly used parts, which were already contained in nearly all the patents stated earlier as public property, and without any contribution of other mechanisms, the patent provides a screwing die in which it is feasible to thread two different types of thread, without doing more than turning the eccentric-holder part a certain controlled measurement and at the same time breaking the connection between the die chaser teeth and the part that is being worked, allowing the screwing die to be extracted quickly, by turning the eccentric-holder part by its outer edge in the direction of opening.

To do this, the upper surface of one of the conventional towers adjacent to a die chaser of a screwing die is used, on whose surface contact is established with the lower hidden surface of the eccentric-holder, understanding by the said lower hidden surface that of the said part which is seated on the said towers and on the circular surface that they provide, only interrupted by the four radial spaces for the die chasers.

In one of the said towers, a hole is drilled with its axis parallel to the axis of the screwing die, so that a blind hole is obtained and in which a commercial spring and a steel ball are housed. This steel ball obviously projects above the circular surface, obliged by the spring.

At the same time, two small blind holes are made in the lower hidden surface of the eccentric-holder part, which thus form housings capable of receiving the said steel ball. These two holes are of a circular section and are separated with a certain distance between on and the other. with the theoretical centres of both in circular alignment according to a radius with respect to the centre of the screwing die.

The hole that holds the spring and the steel ball is placed at a distance from the axis of the threading head which is the same as the radius with which the two small holes in the eccentric-holder are made.

Like this, if the eccentric-holder is turned, the anchoring ball of the threading head, which is obliged by the spring, can house itself in either of the said anchoring holes. In this turn, the eccentric elements of the eccentric-holder have connected with the die chasers and, according to which of the anchoring holes the anchoring ball becomes housed in, the die chasers will jut out in greater or lesser degree towards the centre of the screwing die. As in either of these positions the anchoring between the threading head and the eccentric-holder is effective by means of the spring and the anchoring ball, the screwing die can be positioned with two different diameters to be threaded in the part to be worked, and all this without more than previously turning the eccentric-holder part.

Once that the threading process has finished, the operator himself manually operates the outer side of the eccentric-holder and the die chasers open completely.

All the assembly of the patent can be appreciated in greater detail on the sheets of diagrams which are enclosed together with this specification, in which it is represented as follows:

Figure 1 is a perspective view of the screwing die which incorporates the patent.

Figure 2 is a section elevation of the cover of the patent.

Figure 3 is a top view of the same cover.

Figure 4 is an orientative perspective of the upper inner portions of the screwing die, on which the cover is housed.

Figure 5 is a top view of a screwing die in accordance with the patent, with the action hidden.

Figure 6 refers to an elevation view of the above.

Figure 7 is a partial cross-section of the screwing die of the patent, carried out in agreement with figure 8 - section EF, while figure 8 corresponds to the cross-section CD carried out in figure 7.

Figure 9 shows the cross-section GH performed on figure 10, while this1 represents the cross-section AB shown in figure 9.

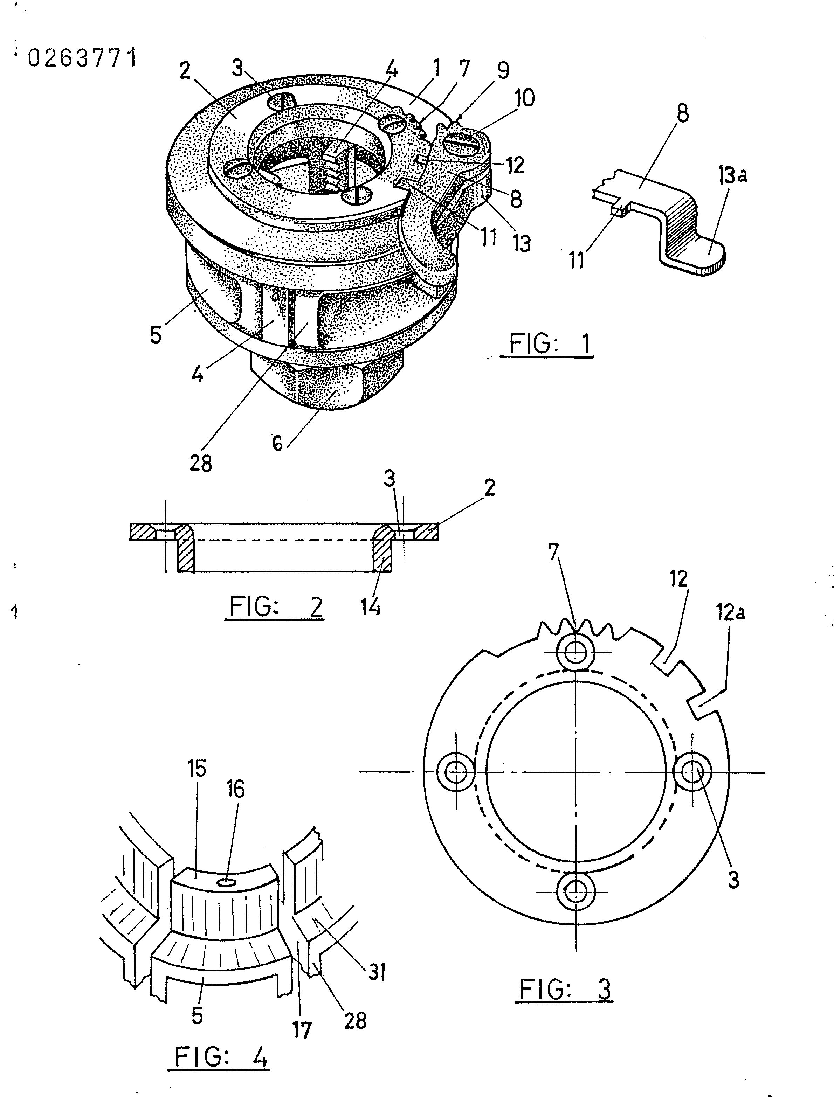

According to figure 1, a screwing die (5), with its classical octagonal end (6) and die chasers (4) in a radial direction, is occupied in its upper part by the eccentric-holder part (1), which in its lower face is equipped with a series of eccentric grooves, not shown because they are well-known, in which are lodged the upper lugs of the disc chasers (4), not shown either, in which the turning to the right or to the left of the part (1) causes the die chasers (4) to move backwards and forwards from their housing in the body of the screwing die (5).

The inside of the body of the screwing die is shown in diagram form in figure 4, in which it is possible to appreciate the crenels (15), which on their outside receive the disc (1) and on their inside the top ring of the cover (2).

The cover (2) is shown in figures 2 and 3 and is made up of an upper hollow circular portion and the top ring (14), which is referred to in the previous paragraph. The upper circular portion has four countersunk holes (3) drilled in it, through which screws are passed to fix this part to the crenels (15) by way of the blind holes (16) in them; consequently, the cover (2) becomes solidly joined to the body (5) of the screwing die, and the top ring (14) of the cover (2) is at the same time taken in inside the crenels (15).

The cover (2) is equipped with two slots or recesses (12) and (12a), which can be seen in figures 1 and 3, and a toothed portion (7) which is separated from the former. The eccentric-holder (1) is at the same time equipped with the boss (13) on which the lever (8) is fitted, and this has a projection (11) far away from the turning point (10) and a toothed portion (9) near the turning point (10). In the position demonstrated in figure 1, the projection (11) is lodged in one of the recesses or slots (12) or (12a) of the cover (2), and the teeth (7) of the cover and (9) of the lever are situated near each other. This position of the screwing die corresponds to the position for threading, in which the eccentric-holder (1) is immobilized against the fixed cover (2) by means of the lever (8).

Once that the operation of threading the part has finished, the end of the lever (8) can be operated in the ways previously described. The said lever end can be made either flat and curved or else in an elbow shape (13a) as can be seen in figure 1. By operation on the end of the lever (8), the projection (11) on its side loses contact with one recess (12) or with the other recess (12a) of the cover (2) and the teeth (9) of the lever (8) engage with the teeth (7), with which the eccentric-holder (1) turns necessarily towards the left, thus opening the die chasers automatically and making it possible to immediately extract the screwing die for a new operation.

The projection (11) of the lever (8) can previously avail itself of either one of the two recesses (12) and (12a) of the cover, so that with one single cover it is possible to proceed with the threading of the part to be worked with two different measurements.

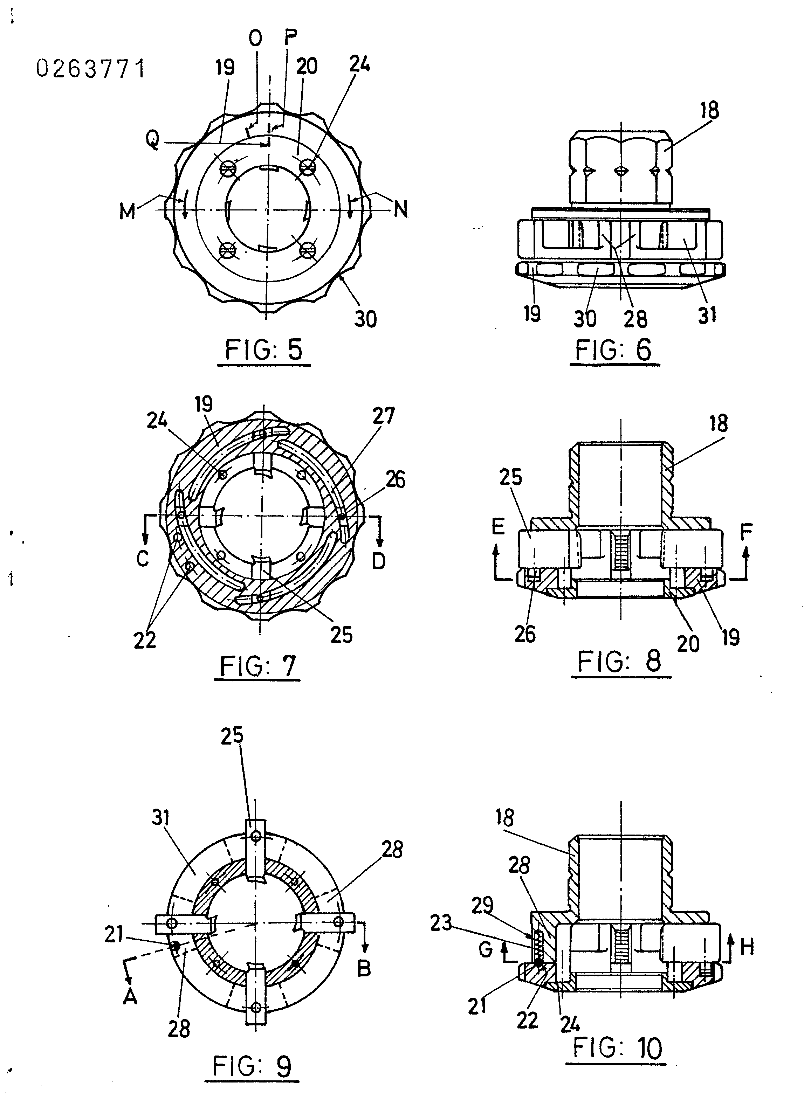

With regard to figures 5 and 10, we repeat what has been said earlier, to the effect that this solution adopted by the patent is referred to those screwing dies in which the mechanisms are totally hidden by the eccentric-holder part (19). Therefore, with figures 5 we can observe the said eccentric-holder part (19) with its ergonomic outer shape (30), and the front cover (20) for closure connected by means of screws (24) to the threading head (18). Also in figure 5, it is possible to appreciate the engraved marks (O) and (P) on the eccentric-holder (20) and the engraved mark (Q) on the front cover, as well as the arrows (M) and (N) for opening and closing respectively of the die chasers of the screwing die.

A side view of the said figure 5 is offered in figure 6, with the threading head (18), eccentric-holder (19) and the ergonomic side (30), together with the towers (28) with the hollow gaps (31) between them.

In figure 7, it is possible to see the eccentric spirals (27) of the eccentric-holder (19) in which are housed the pins (26) of the die chasers (25), so that when the eccentric-holder (19) is turned, it makes the die chasers stick out to a greater degree towards the centre of the screwing die. The cover (20) with the screws (24) can be appreciated in this top view, as so can the holes (22) carried out in circular alignment with respect to the centre of the screwing die. Evidently, this cross-section is the result of the EF cross-section performed at mid-height of the eccentric-holder (19) in figure 8.

In this latter, figure 8, which as we have said corresponds to the CD view from figure 7, the die chasers (25) can be seen together with their pins (26) housed in the eccentric spirals of the part (19) and the front cover (20) of the assembly, all of this over the threading head (18).

With reference to figures 9 and 10, which are the product of the cross-sections GH of figure 10 and AB of figure 9 respectively, notice the die chasers (25) housed in the corresponding spaces or radial passages arranged between the towers (28), and that these towers form the upper part of the theoretically circular surface (31) on which the eccentric-holder (19) slides. It is precisely in one of these towers (28) that the blind cylindrical hole (29) is drilled so that it can receive the spring (23) and the steel ball (21), which is made clear in figure 10.

The spring (23), which is commercial,acts on the ball (21) in the sense that it forces it towards the lower surface of the eccentric-holder (19), in such a way that when the eccentric-holder (19) is turned, the ball (21) is pressed down by the said surface and can not stick out from its housing (29) until it meets with one of the holes or indentations (22) made in this surface. When this happens, the ball becomes lodged in one of the two anchoring holes (22) in a stable position.

It was pointed out previously that the distance of the axis of the housing (29) in relation to the axis of the screwing die, corresponds with the distance from the centres of the anchoring holes (22) to the said axis of the screwing die, in order to establish the correspondence of turning for this anchoring. The anchoring holes (22) are carried out as shown in figure 7, in the space included between the outer edge of the eccentric-holder (19) and the outer edge of one of the eccentric spitals (27), so that one position of one of the anchoring holes corresponds to a certain positioning of the die chasers (25) by their moving out towards the central hollow of the screwing die, while placing the ball in the other hole will give a different positioning.

The marks or engravings (O) and (P) in the eccentric-holder (19) and (Q) in the front cover are responsible for setting the screwing die for either of the two threaded sizes, depending on the turning direction, (M) for opening and (N) for closure. Thus, with the (Q) mark of the cover (20) in line with the (P) of the eccentric-holder (19), the steel ball becomes lodged in the upper hole (22) shown in figure 7 and the die chasers jut out a certain measurement towards the central hollow of the screwing die, for example to cut a 1 1/4 inch thread. If we turn the eccentric-holder (19) in the direction (N) for closure, the marks or engravings (O) and (Q) are made to coincide, and the ball (21) becomes lodged in the lower hole (22) shown in figure 7, with which the die chasers jut out even further towards the centre of the screwing die for example to cut a 1 inch thread.

These movements are caused by turning the eccentric-holder (19), as we have said, and by the simple manual operation of it by using its ergonomic exterior (30). The application of the patent can be carried out either on manually operated screwing dies or on motor driven ones, without any exclusion.

It should be emphasized, once that the nature and the advantages of this invention have been described, that its character is not limitative, inasmuch as the changes in the shape, material or dimensions of its component parts will not in any way alter its essence , as long as they do not involve a substancial variation in the whole.

**Claims**

1.- "IMPROVEMENTS IN SCREWING DIES" of the type that are made up of a threading head which has towers that form radial gaps through which can pass the die chasers fitted with pins that move in and out, and in which the said towers form a flat circular surface separated by the free sections to allow the die chasers to pass, and on this surface, the lower hidden face of the eccentric-holder turns, with the whole assembly being closed by front cover fixed to the threading head by means of the corresponding screw, which is essentially characterized because the eccentric-holder has a side projection on which is housed a lever that turns in a fundamentally horizontal plane perpendicular to the axis of the screwing die, and that this lever is provided in an area near to its turning point with a toothed portion of circular shape, and in an area far away from the said turning point, with a projection, while on the side of the front cover which is adjacent to the lever, two angularly separated recesses are made, which are capable of receiving, by the turning of the eccentric-holder, the projection on the lever, while a toothed area is also provided in the front cover in an area close to the toothed area of the lever.

2.- "IMPROVEMENTS IN SCREWING DIES" of the type that are made up of a threading head which has towers that form radial gaps through which can pass the die chasers fitted with pins that move in or out, and in which the said towers form a flat circular surface separated by the free sections to allow the die chasers to pass, and on this surface, the lower hidden face of the eccentric-holder turns, with the whole assembly being closed by a front cover fixed to the threading head by means of the corresponding screws, which is essentially characterized because in one, at least, of the towers adjacent to the gap to allow the die chaser to pass, a cylindrical, blind hole is drilled, in accordance with an axis parallel to the axis of the screwing die, in which a spring is housed with a steel ball on top of it, and this is pushed towards the surface on which the hidden face of the eccentric-holder part moves, making contact with it and having previously provided two anchoring holes in this latter surface which are separated and in circular alignment, which are situated between an eccentric portion of the eccentric-holder part and the exterior of the latter, the two anchoring holes being drilled at the same distance or radius with regard to the centre of the screwing die, which corresponds to the same distance or radius of separation of the previously mentioned hole which houses the spring and the anchoring ball, and in which by turning the eccentric-holder in one direction or the other, the said eccentric-holder becomes anchored due to the insertion, with the pressure of the spring, of the anchoring ball in one or other of the anchoring holes, with a different penetration depth of the die chasers in the central hollow of the screwing die.

3.- "IMPROVEMENTS IN SCREWING DIES", in accordance with the 2nd claim, characterized because the side outer surface of the eccentric-holder is ergonomically shaped and because the cover has one mark or engraving and the eccentric-holder has two, which on being made to coincide in alignment, correspond to one of the two positions of the anchoring ball in one of the two anchoring holes.

0263771

FIG: 1

FIG: 2

FIG: 3

FIG: 4

0263771

FIG: 5

FIG: 6

FIG: 7

FIG: 8

FIG: 9

FIG: 10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-C- 3 834 (LAFERL) --- | 1 | B 23 G 5/10 |
| A | GB-A- 24 610 (HART) (A.D. 1912) --- | 1 | |
| A | FR-A- 745 027 (PINATEL) --- | | |
| A | FR-A- 604 899 (BORDET) --- | | |
| A | US-A-2 938 222 (BJALME) ----- | | |

TECHNICAL FIELDS SEARCHED (Int. Cl.4)

B 23 G 1/00
B 23 G 5/00

The present search report has been drawn up for all claims

| Place of search | Date of completion of the search | Examiner |
|---|---|---|
| THE HAGUE | 05-01-1988 | BOGAERT F.L. |